# EUROPEAN PATENT SPECIFICATION

(11) **EP 3 506 730 B1**
(45) Date of publication and mention of the grant of the patent: **21.12.2022**
(21) Application number: 16914620.6
(22) Date of filing: 01.09.2016
(51) Int. Cl.: A01D 69/08, A01D 34/68

(54) **A WALK BEHIND WORKING MACHINE**
HANDGEFÜHRTE ARBEITSMASCHINE
MACHINE DE TRAVAIL POUSSÉE

(43) Date of publication of application: 10.07.2019
(73) Proprietor: Techtronic Outdoor Products Technology Limited, Hamilton HM12 (BM)
(72) Inventor: CHUNG, Koon For, Kwai Chung Hong Kong (HK); XIAO, Li Qiang, Dongguan Guangdong 523960 (CN); GUO, Jian Zhong, Dongguan Guangdong 523960 (CN)
(74) Representative: Novagraaf Group
(86) International application number: PCT/CN2016/097788
(87) International publication number: WO 2018/040054

(56) References cited:
- EP-A1- 1 219 156
- EP-A1- 2 311 308
- CN-A- 1 362 009
- CN-A- 101 595 787
- CN-A- 101 946 593
- CN-A- 101 946 593
- CN-U- 202 310 616
- CN-U- 203 575 122
- CN-U- 203 575 122
- US-A- 5 251 711
- US-A- 5 251 711

## Description

This invention relates to a walk behind working machine, such as a lawn mower.

It is generally expensive and complicated to provide self-propelling feature in existing walk behind working machines, such as lawn mowers, because of the complex transmission mechanism required to transmit power from the main motor to the utility part (such as cutting blades) and the complicated gearing required to split the driving torque outputted by the main motor to the movement part (such as driving wheels). In addition, manually moving the walk behind working machine requires much effort from the user because of resistance from gearing and transmission.

EP 1 219 156 A1 discloses a walk behind lawnmower comprising an engine having an output shaft mounted to a cutter via a clutch/break. The output shaft is further connected to a drive shaft of rear wheels of the lawnmower via a transmission comprising a running clutch. Operating of the engine therefore allows wheels and cutter to rotate.

CN 203 575 122 U shows a self-propelled lawn mower including a body, a dual-output shaft gasoline engine, a rotational speed clutch, a sprocket, a walking drive system, a throttle cable, a throttle clutch control device, a rotary swing lever, a throttle clutch control handle, and a hand push handle. The throttle clutch control device is connected to the throttle cable of the gasoline engine and to the throttle clutch control handle. The throttle device and the clutch device are combined into one.

EP 2 311 308 A1 and CN 101 946 593 A describe a clutch device for a gearbox output shaft which allows coupling and uncoupling of the wheels of a lawnmower to an engine of the lawnmower.

US 5 251 711 A discloses a walk behind self-propelled lawnmower having a variable speed drive transmission responsive to operator applied forces. The drive transmission is mounted on a frame and comprises gearing operatively connected to an engine and a shaft for transmitting forces from the engine to a drive shaft drivingly connected to wheels. A clutching structure including a frictional coupling is co-actable with an element of the gearing selectively to provide force transmission to the drive shaft. An actuator structure is controllably connected to the clutching structure and responsive to operator applied forces for controlling the speed at which the lawn mower traverses along a ground surface and to vary the speed proportionally to operator applied forces.

It is thus an object of the present invention to provide a walk behind working machine in which the aforesaid shortcomings are mitigated or at least to provide a useful alternative to the trade and public.

According to the present invention, there is provided a walk behind working machine including a driving motor, at least one wheel, and a clutch assembly interposed between said driving motor and said wheel, wherein said clutch assembly is movable between a coupled configuration in which said clutch assembly is coupled with an output of said driving motor for transmitting power from said driving motor to said at least one wheel and an uncoupled configuration in which said clutch assembly is uncoupled from said output of said driving motor, characterized in further including a control assembly operable to simultaneously activate said driving motor and move said clutch assembly from said uncoupled configuration to said coupled configuration, wherein said control assembly includes a mechanical or electrical actuator operable to move an actuating member to move in a first direction to act on a switch to activate said driving motor and to simultaneously bring the clutch assembly in the coupled condition.

Lawn mowers according to the embodiment of the present invention will now be described, by way of examples only, with reference to the accompany drawings, in which:
Fig. 1 is a partial sectional view of a lawn mower according to a first embodiment of the present invention;
Fig. 2 is a perspective view of a clutch assembly and motor of the lawn mower shown in Fig. 1 in a first configuration;
Fig. 3 is a partial sectional view of the clutch assembly shown in Fig. 2;
Fig. 4 is a perspective view of the clutch assembly and motor shown in Fig. 2 in a second configuration
Fig. 5 is a partial sectional view of the clutch assembly shown in Fig. 4.

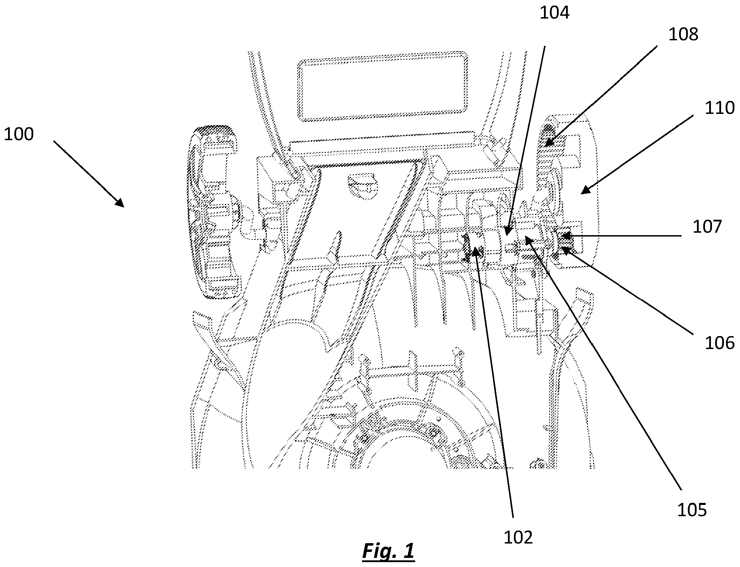

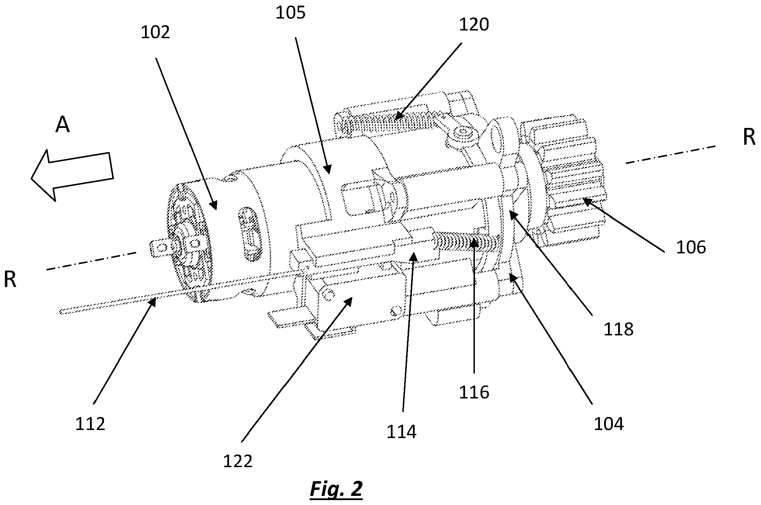

A partial sectional view of a lawn mower (being a kind of walk behind working machine) according to a first embodiment of the present invention is shown in Fig. 1, and generally designated as 100. The lawn mower 100 includes a driving motor 102 with a clutch assembly 104, the driving motor 102 and the clutch assembly 104 forming a compact gearbox motor assembly 105. An output of the gearbox motor assembly 105 is fixedly engaged with a pinion 106 for simultaneous rotational movement about a longitudinal axis R-R (see Figs. 2-5). External gear teeth 107 of the pinion 106 are in mesh with internal gear teeth 108 of a rear wheel 110 of the lawn mower 100. The clutch assembly 104 is interposed between the driving motor 102 and the rear wheel 110. By way of such an arrangement, when the clutch assembly 104 is coupled with the driving motor 102, and when the driving motor 102 is activated, the driving motor 102 will drive the pinion 106 to rotate to thereby drive the rear wheel 110 to rotate to move the lawn mower 100. The compact gearbox motor assembly 105 (comprising the driving motor 102 and the clutch assembly 104) is directly installed to an axle connected with the rear wheel 110.

The lawn mower 100 has a second motor (not shown) for driving the utility part, such as cutting blades (not shown). Operation of the driving motor 102 and the second motor may each be independently controlled.

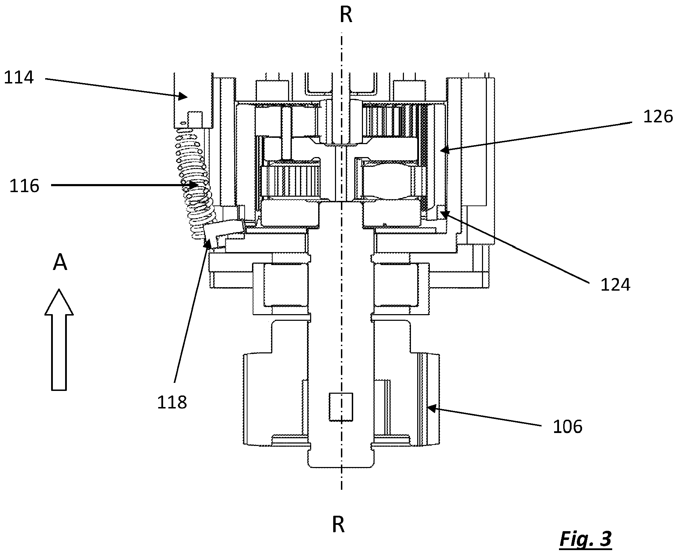

Figs. 2 and 3 show the compact gearbox motor assembly 105 (comprising the driving motor 102 and the clutch assembly 104) with the clutch assembly 104 in an uncoupled configuration, in which the clutch assembly 104 is out of coupling with the driving motor 102.

The compact gearbox motor assembly 105 also includes a pull wire 112 which is connected at one longitudinal end with a sliding member 114 and at an opposite longitudinal end with an operating lever (not shown) manually operable by a user to selectively pull or release the pull wire 112 to move the pull wire 112 along its length. A longitudinal end of the sliding member 114 is connected with the pull wire 112, and an opposite longitudinal end of the sliding member 114 is connected with a clutch spring 116, which is in turn attached to a ring gear locking member 118. The ring gear locking member 118 is also attached to a pre-tensioned reset spring 120.

When the clutch assembly 104 is in the uncoupled configuration as shown in Figs. 2 and 3, the pull wire 112 is in a released position to which it is biased by the reset spring 120. The sliding member 114 is in an inoperative position relative to a micro-switch 122, which is operatively associated with the driving motor 102. When the sliding member 114 is in the inoperative position, the driving motor 102 is stopped (i.e. not activated). In addition, when the clutch assembly 104 is in the uncoupled configuration, the ring gear locking member 118 is out of coupling with detents 124 of a ring gear 126 connected with an output shaft of the driving motor 102, such that the pinion 106 (and thus the rear wheel 110) is freely rotatable relative to the output shaft of the driving motor 102. A user may then pull or push the lawn mower 100 without involving any gear and transmission mechanism of the driving motor 102.

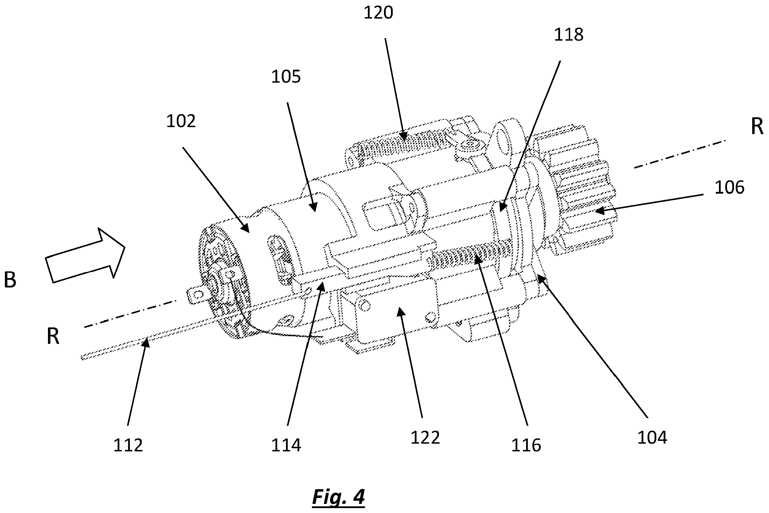

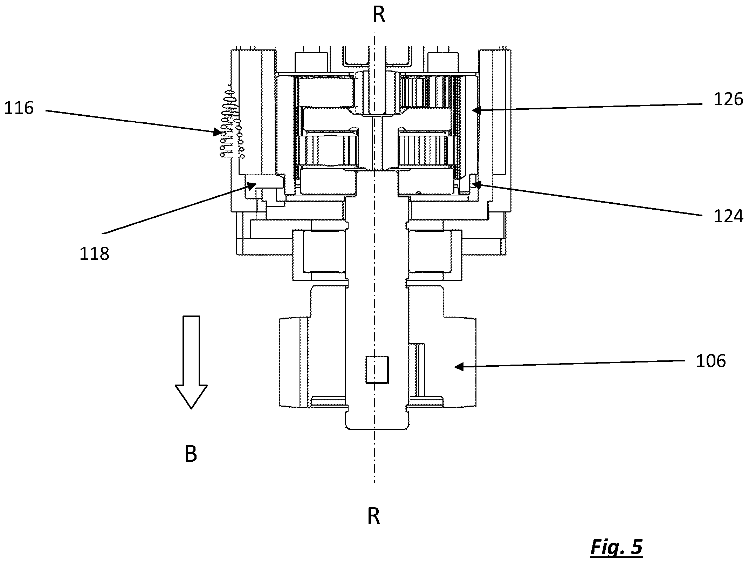

When the pull wire 112 is pulled in the direction indicated by the arrow A shown in Figs. 2 and 3, i.e. away from the pinion 106, and against the pre-tensioned force of the reset spring 120, the sliding member 114 is pulled to move in the same direction indicated by the arrow A, to the position shown in Figs. 4 and 5, to act on the micro-switch 122 to complete an electric circuit to thereby activate the driving motor 102. In this way, the clutch spring 116 is stretched and also pulls the ring gear blocking member 118, against and overcoming the pre-tensioned force of the reset spring 120, to the position shown in Figs. 4 and 5. In this position, the ring gear locking member 118 is received within the detents 124 of the ring gear 126 connected with the output shaft of the driving motor 102, so that the ring gear locking member 118 and the ring gear 126 are engaged for simultaneous rotational movement about the axis R-R, and the clutch assembly 104 is thus in the coupled configuration. Operation of the driving motor 102 causes rotation of the ring gear 126, which in turn brings about rotation of the ring gear locking member 118 and thus the pinion 106. The rear wheel 110 is therefore driven by the driving motor 102. It can thus be seen that, when in the coupled configuration, the clutch assembly 104 transmits power from the driving motor 102 to the rear wheel 110.

When the user releases the pull wire 112, the pull wire 112 is returned, under the force of the clutch spring 116, to its position as shown in Figs. 2 and 3. The sliding member 114 simultaneously moves in the direction indicated by the arrow B (which is opposite to the direction indicated by the arrow A in Figs. 2 and 3) back to the inoperative position shown in Figs. 2 and 3, thus disconnecting the electric circuit, switching off the micro-switch 122, and deactivating the driving motor 102. The compact gearbox motor assembly 105 is thereby returned to the configuration as shown in Figs. 2 and 3, and the clutch assembly 104 is returned to the uncoupled configuration. Because of the pre-tensioning force of the reset spring 116, the clutch assembly 104 is biased towards the uncoupled configuration.

It can be seen that coupling of the clutch assembly 104 with and uncoupling of the clutch assembly 104 from the pinion 106 is controlled by selectively pulling and releasing the pull wire 112 along its length. More particularly, pulling the pull wire 112 to move it along its length in the direction indicated by the arrow A in Figs. 2 and 3 simultaneously activates the driving motor 102 and moves the clutch assembly 104 from the uncoupled configuration to the coupled configuration; and releasing the pulling wire 112 to allow it to move along its longth in the direction indicated by the arrow B in Figs. 4 and 5 simultaneously deactivates the driving motor 102 and moves the clutch assembly 104 from the coupled configuration to the uncoupled configuration. While the sliding member 114 is discussed thus far in the context as being actuatable by the pull wire 112 to move between its operative position and operative position, it is envisaged that the pull wire 112 (which acts as an actuator) may be replaced by other suitable mechanical and/or electrical actuators, such as a solenoid.

It should also be understood that certain features of the invention, which are, for clarity, described in the context of separate embodiments, may be provided in combination in a single embodiment. Conversely, various features of the invention which are, for brevity, described in the context of a single embodiment, may also be provided separately or in any appropriate subcombinations within the scope of the appended claims.

## Claims

1. A walk behind working machine (100) including:
a driving motor (102),
at least one wheel (110), and
a clutch assembly (104) interposed between said driving motor and said wheel, wherein said clutch assembly is movable between a coupled configuration in which said clutch assembly is coupled with an output of said driving motor for transmitting power from said driving motor to said at least one wheel and an uncoupled configuration in which said clutch assembly is uncoupled from said output of said driving motor, **characterized in** further including a control assembly operable to simultaneously activate said driving motor and move said clutch assembly from said uncoupled configuration to said coupled configuration, wherein said control assembly includes a mechanical or electrical actuator (112) operable to move an actuating member (114) to move in a first direction to act on a switch (122) to activate said driving motor and to simultaneously bring the clutch assembly (104) in the coupled condition.

2. A machine according to Claim 1, further **characterized in that** said actuating member is movable in a second direction which is opposite to said first direction to act on said switch to deactivate said driving motor.

3. A machine according to Claims 1 or 2 wherein said mechanical or electrical actuator is a pull wire or a solenoid.

4. A machine according to any of the preceding claims, further **characterized in that** said clutch assembly is installed to an axle connected with said at least one wheel.

5. A machine according to any of the preceding claims, further **characterized in that** said clutch assembly includes a locking member (118) which, when said clutch assembly is in said coupled configuration, is engaged with a ring gear (126) coupled with an output of said driving motor to thereby allow simultaneous rotational movement of said locking member and said ring gear.

6. A machine according to Claim 5, further **characterized in that**, when said clutch assembly is in said coupled configuration, at least part of said locking member is received within a detent (124) of said ring gear.

## Patentansprüche

1. Handgeführte Arbeitsmaschine (100), einschließlich:
eines Antriebsmotors (102),
mindestens eines Rads (110), und
einer Kupplungsanordnung (104), die zwischen dem Antriebsmotor und dem Rad eingeschoben ist, wobei die Kupplungsanordnung zwischen einer gekoppelten Konfiguration, in der die Kupplungsanordnung mit einer Ausgabe des Antriebsmotors gekoppelt ist, zum Übertragen von Leistung von dem Antriebsmotor zu dem mindestens einen Rad und einer entkoppelten Konfiguration, in der die Kupplungsanordnung von der Ausgabe des Antriebsmotors entkoppelt ist, bewegbar ist,
**dadurch gekennzeichnet, dass** sie ferner eine Steueranordnung einschließt, die betriebsfähig ist, um den Antriebsmotor gleichzeitig zu aktivieren und die Kupplungsanordnung von der entkoppelten Konfiguration zu der gekoppelten Konfiguration zu bewegen, wobei die Steueranordnung einen mechanischen oder elektrischen Aktuator (112) einschließt, der betriebsfähig ist, um ein Betätigungselement (114) zu bewegen, um sich in einer ersten Richtung zu bewegen, um auf einen Schalter (122) zu wirken, um den Antriebsmotor zu aktivieren, und gleichzeitig die Kupplungsanordnung (104) in den gekoppelten Zustand zu bringen.

2. Maschine nach Anspruch 1, ferner **dadurch gekennzeichnet, dass** das Betätigungselement in einer zweiten Richtung bewegbar ist, die der ersten Richtung entgegengesetzt ist, um auf den Schalter zu wirken, um den Antriebsmotor zu deaktivieren.

3. Maschine nach Anspruch 1 oder 2, wobei der mechanische oder elektrische Aktuator ein Zugdraht oder ein Solenoid ist.

4. Maschine nach einem der vorstehenden Ansprüche, ferner
**dadurch gekennzeichnet, dass** die Kupplungsanordnung an einer Achse installiert ist, die mit dem mindestens einen Rad verbunden ist.

5. Maschine nach einem der vorstehenden Ansprüche, ferner
**dadurch gekennzeichnet, dass** die Kupplungsanordnung ein Verriegelungselement (118) einschließt, das, wenn sich die Kupplungsanordnung in der gekoppelten Konfiguration befindet, mit einem Hohlrad (126) in Eingriff steht, das mit einer Ausgabe des Antriebsmotors gekoppelt ist, wobei dadurch eine gleichzeitige Drehbewegung des Verriegelungselements und des Hohlrads ermöglicht wird.

6. Maschine nach Anspruch 5, ferner **dadurch gekennzeichnet, dass,** wenn sich die Kupplungsanordnung in der gekoppelten Konfiguration befindet, mindestens ein Teil des Verriegelungselements innerhalb einer Sperre (124) des Hohlrads aufgenommen ist.

## Revendications

1. Machine de travail poussée (100) incluant :
un moteur d'entraînement (102),
au moins une roue (110), et
un ensemble embrayage (104) interposé entre ledit moteur d'entraînement et ladite roue, dans laquelle ledit ensemble embrayage est mobile entre une configuration accouplée dans laquelle ledit ensemble embrayage est accouplé à une sortie dudit moteur d'entraînement pour une transmission de puissance à partir dudit moteur d'entraînement à ladite au moins une roue et une configuration désaccouplée dans laquelle ledit ensemble embrayage est désaccouplé de ladite sortie dudit moteur d'entraînement,
**caractérisée en ce qu'elle** inclut en outre un ensemble de commande pouvant fonctionner pour activer simultanément ledit moteur d'entraînement et déplacer ledit ensemble embrayage de ladite configuration désaccouplée vers ladite configuration accouplée, dans laquelle ledit ensemble de commande inclut un actionneur mécanique ou électrique (112) pouvant fonctionner pour déplacer un élément d'actionnement (114) afin de se déplacer dans une première direction afin d'agir sur un interrupteur (122) pour activer ledit moteur d'entraînement et pour amener simultanément l'ensemble embrayage (104) à l'état accouplé.

2. Machine selon la revendication 1, **caractérisée en outre en ce que** ledit élément d'actionnement est mobile dans une seconde direction qui est opposée à ladite première direction pour agir sur ledit interrupteur afin de désactiver ledit moteur d'entraînement.

3. Machine selon la revendication 1 ou 2, dans laquelle ledit actionneur mécanique ou électrique est un fil de traction ou un solénoïde.

4. Machine selon l'une quelconque des revendications précédentes, en outre **caractérisée en ce que** ledit ensemble embrayage est installé sur un essieu relié à ladite au moins une roue.

5. Machine selon l'une quelconque des revendications précédentes, en outre **caractérisée en ce que** ledit ensemble embrayage inclut un élément de verrouillage (118) qui, lorsque ledit ensemble embrayage est dans ladite configuration accouplée, est mis en prise avec une couronne (126) accouplée à une sortie dudit moteur d'entraînement pour permettre ainsi un mouvement de rotation simultané dudit élément de verrouillage et de ladite couronne.

6. Machine selon la revendication 5, en outre **caractérisée en ce que,** lorsque ledit ensemble embrayage est dans ladite configuration accouplée, au moins une partie dudit élément de verrouillage est reçue dans un cran (124) de ladite couronne.
